# EUROPÄISCHE PATENTANMELDUNG

(11) **EP 4 835 519 A2**
(43) Veröffentlichungstag der Anmeldung: **04.11.2026**
(21) Anmeldenummer: 26168914.5
(22) Anmeldetag: 30.03.2026
(51) Int. Cl.: G01S 17/36

(54) **INTEGRIERTER SCHALTKREIS FÜR EIN LASER-ENTFERNUNGSMESSGERÄT**

(30) Priorität: 11.04.2025 DE 102025114333
(71) Anmelder: Robert Bosch GmbH, 70442 Stuttgart (DE)
(72) Erfinder: Noe, Stefan, 70563 Stuttgart (DE); Schmidtke, Bernd, 71229 Leonberg (DE); Skultety-Betz, Uwe, 70771 Leinfelden-Echterdingen (DE); Schliffke, Paul, 74321 Bietigheim-Bissingen (DE)

(57) **Zusammenfassung**

Die Erfindung betrifft einen integrierten Schaltkreis (2) für ein Laser-Entfernungsmessgerät (1), umfassend:
- Ein erstes Sensor-Array (3), wobei das erste Sensor-Array (3) für eine Erfassung eines von einem Objekt (7) reflektierten Lichts einer Laserdiode (5) des Laser-Entfernungsmessgeräts (1) vorgesehen ist,
- Ein zweites Sensor-Array (4), wobei das zweite Sensor-Array (4) für eine Erfassung des von einem internen Referenzobjekt (8) reflektierten Lichts der Laserdiode (5) vorgesehen ist,
wobei das zweite Sensor-Array (4) eine geringere Größe aufweist als das erste Sensor-Array (3),
- Ein Barriere-Element (6), wobei das Barriere-Element (6) zwischen dem ersten Sensor-Array (3) und dem zweiten Sensor-Array (4) angeordnet ist, um einer Lichtübertragung zwischen dem ersten Sensor-Array (3) und dem zweiten Sensor-Array (4) entgegenzuwirken.

Ferner betrifft die Erfindung ein Laser-Entfernungsmessgerät sowie ein Verfahren zum Durchführen einer Laser-Entfernungsmessung, ein Computerprogramm, eine Vorrichtung und ein Speichermedium zu diesem Zweck.

## Beschreibung

Die Erfindung betrifft einen integrierten Schaltkreis für ein Laser-Entfernungsmessgerät. Ferner betrifft die Erfindung ein Laser-Entfernungsmessgerät sowie ein Verfahren zum Durchführen einer Laser-Entfernungsmessung, ein Computerprogramm, eine Vorrichtung und ein Speichermedium zu diesem Zweck.

### Stand der Technik

Zur Messung von Entfernungen über die Laufzeit von Licht können Laser-Entfernungsmessgeräte verwendet werden. Da elektro-optische Eigenschaften der Lichtquellen bzw. -empfänger eine absolute Bestimmung der Laufzeit alleine aus elektrischen Signalen nicht erlauben, wird üblicherweise eine Referenzmessung an einer bekannten Strecke innerhalb des Laser-Entfernungsmessgeräts durchgeführt. Diese kann mittels schaltbarer optischer Elemente, zweier synchroner Lichtquellen oder zweier synchroner Empfänger realisiert werden, die unterschiedliche Mehrkosten haben.

### Offenbarung der Erfindung

Gegenstand der Erfindung ist ein integrierter Schaltkreis mit den Merkmalen des Anspruchs 1, ein Laser-Entfernungsmessgerät mit den Merkmalen des Anspruchs 8, ein Verfahren mit den Merkmalen des Anspruchs 9, ein Computerprogramm mit den Merkmalen des Anspruchs 13, eine Vorrichtung mit den Merkmalen des Anspruchs 14 sowie ein computerlesbares Speichermedium mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen integrierten Schaltkreis beschrieben sind, selbstverständlich auch im Zusammenhang mit dem erfindungsgemäßen Laser-Entfernungsmessgerät, dem erfindungsgemäßen Verfahren, dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein integrierter Schaltkreis, insbesondere ein anwendungsspezifischer integrierter Schaltkreis (englisch: "application-specific integrated circuit", ASIC) für ein Laser-Entfernungsmessgerät, umfassend:
- Ein erstes Sensor-Array, welches im Rahmen der vorliegenden Erfindung auch als Ziel-Array bezeichnet und verstanden werden kann, wobei das erste Sensor-Array für eine Erfassung eines von einem Objekt reflektierten Lichts einer Laserdiode des Laser-Entfernungsmessgeräts vorgesehen ist,
- Ein zweites Sensor-Array, welches im Rahmen der vorliegenden Erfindung auch als Referenz-Array bezeichnet und verstanden werden kann, wobei das zweite Sensor-Array für eine Erfassung des von einem internen Referenzobjekt reflektierten Lichts der Laserdiode vorgesehen ist,
   wobei das zweite Sensor-Array eine geringere Größe aufweist als das erste Sensor-Array,
- Ein Barriere-Element, wobei das Barriere-Element zwischen dem ersten Sensor-Array und dem zweiten Sensor-Array angeordnet ist, um einer Lichtübertragung zwischen dem ersten Sensor-Array und dem zweiten Sensor-Array entgegenzuwirken.

Die geringere Größe ist insbesondere derart vorgesehen, dass lichtempfindliche Flächen und/oder eine Anzahl an lichtempfindlichen Elementen, bzw. Pixel, von dem ersten Sensor-Array und dem zweiten Sensor-Array unterschiedlich groß und/oder geformt sind. Das Entgegenwirken kann auch als Verhindern oder Unterdrücken verstanden werden. Durch die Erfindung kann durch die geringere Größe des zweiten Sensor-Arrays eine kostengünstige und weniger rechenaufwändige Bereitstellung eines Referenzsignals für die Laser-Entfernungsmessung ermöglicht werden. Ferner kann auch eine Verringerung von Ausschuss durch statistische Fehler in den Sensor-Arrays bereitgestellt werden. Der Ausschuss von Mikrochips aus Halbleiterprozessen steigt insbesondere mit der Chipfläche an, weil sich eine prozessabhängige Defektdichte mit höherer Wahrscheinlichkeit zum Ausfall eines Chips führt. Die Auswirkung von Defekten kann auch durch Redundanz oder Zusammenfassung mehrerer Sensorelemente verringert werden.

Außerdem ist es von Vorteil, wenn das Barriere-Element ein lichtundurchlässiges Material umfasst, insbesondere Kunststoff oder Metall. So kann der Lichtübertragung zwischen dem ersten Sensor-Array und dem zweiten Sensor-Array effektiv entgegengewirkt werden.

Auch ist es optional denkbar, dass der integrierte Schaltkreis ferner eine Glasfläche umfasst, wobei die Glasfläche über dem ersten Sensor-Array und dem zweiten Sensor-Array angeordnet ist, um das erste Sensor-Array und das zweite Sensor-Array mit der Glasfläche abzudecken. So können vorteilhaft Verunreinigungen und/oder Beschädigungen der Sensor-Arrays verhindert werden.

Des Weiteren ist es im Rahmen der Erfindung optional möglich, dass die Glasfläche eine Antireflexbeschichtung aufweist, um eine Lichtausbeute zu erhöhen. Um die Lichtausbeute zu erhöhen und Reflexionen in der Glasfläche bzw. zwischen Glas und Sensor-Array-Oberfläche zu reduzieren, wird somit bevorzugt die Antireflexbeschichtung der Glasfläche bereitgestellt. Diese verhindert insbesondere Reflexionen in einem Empfangswellenlängenbereich der Sensor-Arrays, d.h. insbesondere in einem Bereich einer Wellenlänge einer Laserdiode des Laser-Entfernungsmessgeräts.

Ferner ist es optional vorgesehen, dass die Glasfläche ein, vorzugsweise schmalbandiges, Farbfilter aufweist, um ein definiertes Lichtwellenspektrum zu blockieren. So kann vorteilhaft Fremdlicht außerhalb der Wellenlänge der Laserdiode des Laser-Entfernungsmessgeräts ausgeblendet werden.

Es kann ferner möglich sein, dass einzelne Sensorflächen des ersten Sensor-Arrays und/oder des zweiten Sensor-Arrays eine mehreckige, insbesondere rechteckige oder quadratische, Form aufweisen.

In einer weiteren Möglichkeit kann vorgesehen sein, dass die einzelnen Sensorflächen des ersten Sensor-Arrays und/oder des zweiten Sensor-Arrays teilweise als Makropixel ausgebildet sind, die jeweils eine Mehrzahl von Subpixeln umfassen, wobei die Subpixel auf eine gemeinsame (Puls-)Leitung verschaltet sind. So kann eine notwendige Fläche für (Puls-)Leitungen reduziert und eine Flächenausnutzung erhöht werden. Ferner kann so vorteilhaft eine Lichtausbeute erhöht werden.

Ebenfalls Gegenstand der Erfindung ist ein Laser-Entfernungsmessgerät umfassend zumindest einen integrierten Schaltkreis gemäß der vorliegenden Erfindung und eine Laserdiode. Damit bringt das erfindungsgemäße Laser-Entfernungsmessgerät die gleichen Vorteile mit sich, wie sie ausführlich mit Bezug auf den erfindungsgemäßen integrierten Schaltkreis beschrieben wurden.

Ebenfalls Gegenstand der Erfindung ist ein Verfahren zum Durchführen einer Laser-Entfernungsmessung mit einem Laser-Entfernungsmessgerät gemäß der vorliegenden Erfindung, umfassend:
- Initiieren eines Aussendens von Licht durch eine Laserdiode des Laser-Entfernungsmessgeräts in Richtung eines Objektes und eines internen Referenzobjektes,
- Auswerten von Sensordaten eines ersten Sensor-Arrays und eines zweiten Sensor-Arrays, um eine Entfernung zwischen dem Laser-Entfernungsmessgerät und dem Objekt zu bestimmen.

Damit bringt das erfindungsgemäße Verfahren die gleichen Vorteile mit sich, wie sie ausführlich mit Bezug auf den erfindungsgemäßen integrierten Schaltkreis beschrieben wurden.

Es kann im Rahmen der Erfindung vorgesehen sein, dass im Rahmen des Auswertens der Sensordaten Zählergebnisse mehrerer Pixel des ersten Sensor-Arrays und/oder des zweiten Sensor-Arrays phasenrichtig addiert werden, um eine räumliche Mittelung bereitzustellen. Der Begriff "phasenrichtig" bedeutet hierbei insbesondere, dass die Zählergebnisse der mehreren Pixel so addiert werden, dass sie sich in ihrer zeitlichen oder räumlichen Phase nicht gegenseitig beeinträchtigen oder auslöschen. Durch die räumliche Mittelung kann Rauschen reduziert und eine Lichtausbeute erhöht werden, um eine Signalqualität zu verbessern.

Von weiterem Vorteil kann vorgesehen sein, dass das Auswerten der Sensordaten umfasst:
- Berechnen einer Energie, insbesondere Lichtenergie, und/oder eines Signalvektors auf Basis von Zählergebnissen jedes Pixels.

Der Signalvektor kann eine Lichtintensität, eine Phasenverschiebung und/oder eine Folge von Messwerten zu verschiedenen Zeitpunkten umfassen. So kann eine präzisere Auswertung und Laser-Entfernungsmessung durchgeführt werden.

In einer weiteren Möglichkeit kann vorgesehen sein, dass das Auswerten der Sensordaten umfasst:
- Auswerten einzelner Makropixel durch einen Mehrphasenzähler, z.B. 8-Phasenzähler, wobei eine Ausleserichtung vorzugsweise senkrecht zu einer Parallaxe, insbesondere einer Parallaxe eines optischen Systems des Laser-Entfernungsmessgeräts, liegt.

Ein Mehrphasenzähler ist insbesondere ein digitaler Zähler, der mehrere diskrete Phasen durchläuft, bevor er sich zurücksetzt und erneut startet. Der Mehrphasenzähler kann als eine spezielle Form eines Ringzählers oder Johnson-Zählers implementiert sein, wobei jede Phase einem bestimmten Zustand innerhalb des Zählerzyklus entsprechen kann. Der Mehrphasenzähler kann beispielsweise mehrere gleichmäßig verteilte Taktsignale erhalten, die gleichmäßig zueinander phasenverschoben sind, um eine gleichmäßige Signalverteilung zu gewährleisten. Die Parallaxe ist insbesondere eine scheinbare Verschiebung eines Objekts relativ zu einem Hintergrund, wenn sich der Beobachtungspunkt verändert. Dieses Phänomen tritt beispielsweise auf, wenn Objekte in unterschiedlicher Entfernung unter verschiedenen Blickwinkeln erscheinen, wenn sie aus verschiedenen Positionen betrachtet werden.

Ebenfalls Gegenstand der Erfindung ist ein Computerprogramm, insbesondere Computerprogrammprodukt, umfassend Befehle, die bei der Ausführung des Computerprogrammes durch wenigstens einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. wenigstens ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch wenigstens einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines Laser-Entfernungsmessgeräts gemäß Ausführungsbeispielen der Erfindung,
- Fig. 2: eine schematische Darstellung eines Laser-Entfernungsmessgeräts gemäß Ausführungsbeispielen der Erfindung,
- Fig. 3: eine schematische Darstellung eines integrierten Schaltkreises gemäß Ausführungsbeispielen der Erfindung,
- Fig. 4: eine schematische Visualisierung eines Verfahrens, einer Vorrichtung, eines Speichermediums sowie eines Computerprogramms gemäß Ausführungsbeispielen der Erfindung.

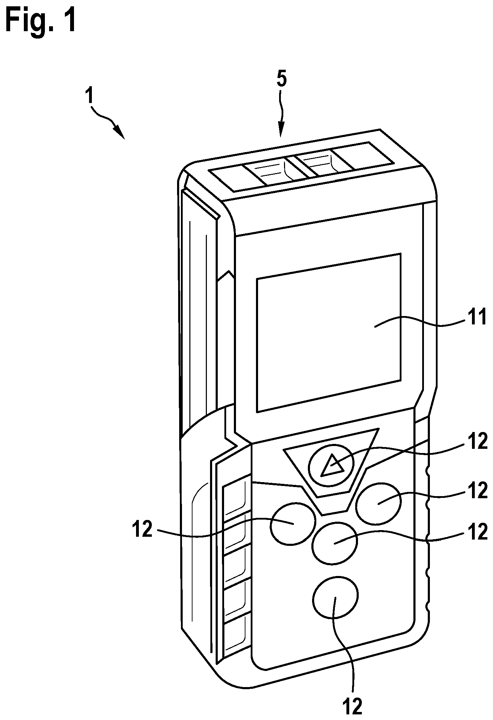

Fig. 1 zeigt eine schematische Darstellung eines Laser-Entfernungsmessgeräts 1 gemäß Ausführungsbeispielen der Erfindung. Dieses umfasst eine Laserdiode 5, ein Display 11 und mehrere Bedientasten 12.

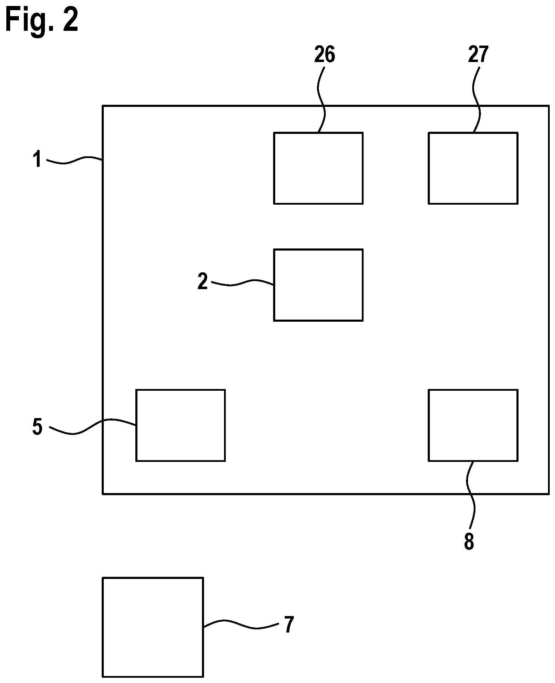

Fig. 2 zeigt eine weitere schematische Darstellung einer inneren Ausstattung des Laser-Entfernungsmessgeräts 1 gemäß Ausführungsbeispielen der Erfindung. Dieses umfasst einen Mikrocontroller 26 und einen Lasertreiber 27 sowie einen (anwendungsspezifischen) integrierten Schaltkreis 2. Ferner umfasst das Laser-Entfernungsmessgerät 1 eine Laserdiode 5. Zudem dargestellt sind ein Objekt 7 und ein internes Referenzobjekt 8, die im Rahmen der Laser-Entfernungsmessung verwendet werden können.

Das Laser-Entfernungsmessgerät 1 gemäß der Erfindung verwendet insbesondere eine indirekte Time of Flight (iToF)-Messung. Das Laser-Entfernungsmessgerät 1 arbeitet beispielsweise mit einer Messung einer Phasenverschiebung eines modulierten Lichtsignals, das vom Laser-Entfernungsmessgerät 1 ausgesendet und von einem Zielobjekt reflektiert wird. Im Folgenden wird die Funktionsweise der indirekten Time of Flight (iToF)-Messung beschrieben. Zunächst kann die Laserdiode 5 im Laser-Entfernungsmessgerät 1 intensitätsmoduliertes Licht, beispielsweise im infraroten oder sichtbaren Bereich, in Richtung eines Zielobjekts 7 senden. Die Modulation erfolgt insbesondere mit einer sinusförmigen oder Rechteckwelle. Das intensitätsmodulierte Licht trifft anschließend auf das Zielobjekt 7 und wird zurück zum Laser-Entfernungsmessgerät 1 reflektiert. Das erste Sensor-Array 3 im Laser-Entfernungsmessgerät 1 kann nun das reflektierte Licht empfangen. Da das Licht eine gewisse Zeit benötigt, um die Strecke hin und zurück zu legen, kommt es zu einer Phasenverschiebung zwischen dem ausgesendeten und dem empfangenen Signal. Diese Phasenverschiebung zwischen dem ausgesendeten und dem empfangenen Signal kann anschließend gemessen werden. Diese Phasenverschiebung ist insbesondere proportional zur zurückgelegten Entfernung des Lichts. Die Entfernung kann anschließend aus der Phasenverschiebung unter Berücksichtigung der Wellenlänge der Modulation und der Lichtgeschwindigkeit berechnet werden. Hierbei kann ferner vorgesehen sein, dass eine Referenzphase mit dem zweiten Sensor-Array 4 mit einem konstanten Abstand zu einem internen Referenzobjekt 8 des Laser-Entfernungsmessgeräts 1 bestimmt wird, um die Phasenverschiebung auf Basis eines Vergleiches mit der Referenzphase zu bestimmen.

Der integrierte Schaltkreis 2 übernimmt insbesondere eine Laserregelung, d.h. beispielsweise eine Steuerung der Laserdiode 5, eine Modulation, eine Signalverarbeitung, eine Phasenmessung und/oder Datenübertragung.

So kann eine Emission der Laserdiode 5 gesteuert werden, indem eine Amplitudenmodulation eines Laserstrahls der Laserdiode 5 erzeugt wird. Dadurch kann sichergestellt werden, dass der Laserstrahl mit der richtigen Frequenz und Phasenlage ausgesendet wird.

Nach dem Empfang eines Bruchteils des ausgesendeten Laserlichts durch die Sensor-Arrays 3,4 kann das empfangene Signal verarbeitet werden. Dies umfasst beispielsweise eine Verstärkung, Filterung und Umwandlung des empfangenen analogen Signals in ein digitales Signal zur weiteren Analyse. Ferner kann die Phasenverschiebung zwischen dem ausgesendeten und dem empfangenen Signal gemessen und gegebenenfalls mit der Referenzphase verglichen werden.

Die digitale Umwandlung in den Mehrphasenzählern kann es ermöglichen, die Phasenverschiebung zwischen dem ausgesendeten und dem empfangenen Signal zu analysieren.

Ein Lasertreiber 27 in dem Laser-System 1, bzw. Laser-Entfernungsmessgerät, hat insbesondere die Aufgabe, digitale Steuersignale in analoge Signale umzuwandeln. Der Lasertreiber 27 erzeugt vorzugsweise analoge Ströme, die benötigt werden, um die Laserdiode 5 zu modulieren. Diese Steuerung ist entscheidend für die Emission des Laserstrahls mit der gewünschten Modulation. Durch eine Umwandlung digitaler Modulationsbefehle in analoge Signale kann der Lasertreiber 27 die Modulation des Laserstrahls steuern. Dies kann gepulstes Licht oder eine kontinuierliche Welle mit variabler Modulationsfrequenz umfassen.

Gemäß Ausführungsbeispielen der Erfindung kann eine kostengünstige Bereitstellung eines Referenzsignals für die Laser-Entfernungsmessung sowie eine Verringerung von Ausschuss durch statistische Fehler in den Sensor-Arrays 3,4 ermöglicht werden.

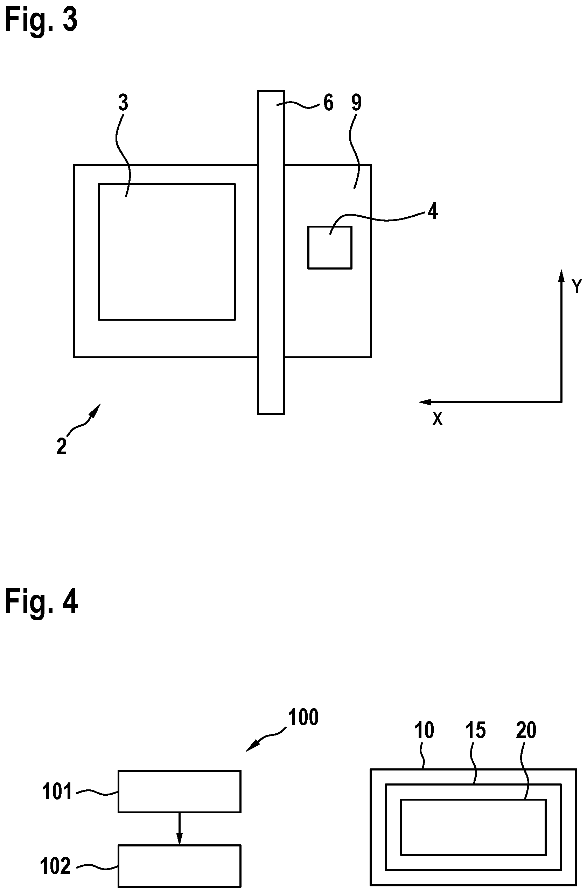

Gemäß der Erfindung können die Sensorflächen der Sensor-Arrays 3,4 auf einem (anwendungsspezifischen) integrierten Schaltkreis (englisch: "application-specific integrated circuit", ASIC) 2 mit den nachfolgenden Eigenschaften angeordnet werden. Eine schematische Darstellung eines integrierten Schaltkreises 2 gemäß Ausführungsbeispielen der Erfindung ist in Fig. 3 dargestellt. Das erste (Ziel-)Sensor-Array 3 und das zweite (Referenz-)Sensor-Array 4 befinden sich vorzugsweise auf demselben integrierten Schaltkreis 2 und erhalten eine gleiche Zeitbasis für die Messung. Das erste (Ziel-)Sensor-Array 3 und das zweite (Referenz-)Sensor-Array 4 haben vorzugsweise einen definierten Mindestabstand voneinander, um ein optisches Übersprechen zu vermeiden oder zumindest zu verringern. Das ermöglicht beispielsweise einen Einbau eines Barriere-Elements 6 zwischen dem ersten (Ziel-)Sensor-Array 3 und dem zweiten (Referenz-)Sensor-Array 4, d.h. insbesondere zwischen einem Empfangs- und einem Referenzpfad des Laser-Entfernungsmessgeräts 1.

Lichtempfindliche Flächen und/oder eine Anzahl an lichtempfindlichen Elementen (Pixel) von dem ersten (Ziel-)Sensor-Array 3 und dem zweiten (Referenz-)Sensor-Array 4 können unterschiedlich groß und geformt sein. Insbesondere kann die Größe des zweiten (Referenz-)Sensor-Arrays 4 gegenüber dem ersten (Ziel-)Sensor-Array 3 reduziert werden, um Kosten zu sparen. Jedes lichtempfindliche Element kann gemäß der Erfindung für Testzwecke und zur Verbesserung der Signalqualität einzeln zu- und abgeschaltet werden. Das verringert insbesondere eine Anzahl unbrauchbarer Sensoren.

Die Zählergebnisse mehrerer Pixel eines jeweiligen Sensor-Arrays 3,4 können auf dem integrierten Schaltkreis 2 phasenrichtig addiert werden, um eine räumliche Mittelung zu erzielen, eine übertragene Datenmenge zu reduzieren und die Signalauswertung zu vereinfachen.

Aus den Zählergebnissen jedes Pixels können auf dem integrierten Schaltkreis eine Energie und/oder ein Signalvektor berechnet werden, um die übertragene Datenmenge zu reduzieren und die Signalauswertung zu vereinfachen.

Erfindungsgemäß können die Sensor-Arrays 3,4 wie folgt in dem (anwendungsspezifischen) integrierten Schaltkreis (englisch: "application-specific integrated circuit", ASIC) 2 angeordnet werden:
Um optisches Übersprechen zwischen dem ersten (Ziel-)Sensor-Array 3 und dem zweiten (Referenz-)Sensor-Array 4 zu verringern, werden die beiden optischen Kanäle vorzugsweise durch eine optische Barriere in Form des Barriere-Elements 6 getrennt. Diese kann ein elastisches Element umfassen, um die optische Abdichtung zu verbessern.

Bevorzugt werden die Sensor-Arrays mit einer Glasfläche 9, bzw. Glasscheibe, abgedeckt, um Verunreinigungen und/oder Beschädigungen der Sensor-Arrays 3,4 zu verhindern. Auch ist denkbar, dass lediglich eines der Sensor-Arrays 3,4 durch die Glasfläche 9 abgedeckt wird.

Um eine Lichtausbeute zu erhöhen und Reflexionen in der Glasfläche 9 bzw. zwischen Glas und Sensor-Array-Oberfläche zu reduzieren, wird bevorzugt eine Antireflexbeschichtung der Glasfläche 9 bereitgestellt, insbesondere in einem Empfangswellenlängenbereich der Sensor-Arrays 3,4, d.h. insbesondere in einem Bereich einer Wellenlänge der Laserdiode 5 des Laser-Entfernungsmessgeräts 1. Zusätzlich kann die Glasfläche 9 ein, vorzugsweise schmalbandiges, Farbfilter umfassen, um Fremdlicht außerhalb der Wellenlänge der Laserdiode 5 des Laser-Entfernungsmessgeräts 1 auszublenden.

Die Sensor-Arrays 3,4 können bevorzugt eine mehreckige, insbesondere rechteckige oder quadratische, Form haben, die sich insbesondere in X*Y identische Sensorelemente (Makropixel) aufteilen. X zählt hierbei insbesondere Pixel in Laser-/Parallaxenrichtung, Y senkrecht dazu.

Gemäß Ausführungsbeispielen der Erfindung kann eine Einzelauswertung jedes Makropixels durch einen Mehrphasenzähler erfolgen. Bei einer größeren Anzahl von Makropixeln kann eine notwendige Fläche für Pulsleitungen einen Großteil der Sensor-Arrays 3,4 und die Mehrphasenzähler erhebliche Chipfläche beanspruchen. Vorzugsweise liegt die Ausleserichtung (Y) senkrecht zur Parallaxe (X), um einen möglichst großen Parallaxenausgleich zu ermöglichen. Als sinnvoller Kompromiss kann eine Untermenge von wenigen Pulsleitungen je X-Position, also wenigen Makropixeln (z. B. 3 von 30) vorgesehen sein.

Weil auch die Zahl der Mehrphasenzähler begrenzt ist, kann eine Untergruppe von Makropixeln (Aktivierungsmuster) für eine bestimmte Messaufgabe ausgewählt werden. Vorzugsweise hat dieses Aktivierungsmuster eine hohe Dichte im Bereich maximaler Schärfe der Optik (Fernfeld) und eine reduzierte Dichte im unscharfen Bereich (Nahfeld).

Diese Pulsleitungen müssen vorzugsweise einen angemessenen Abstand untereinander und zu statischen Signalleitungen auf den integrierten Schaltkreis haben 2, um Pulslaufzeiten möglichst kurz zu halten.

Um eine Flächenausnutzung und Lichtausbeute zu erhöhen, kann jeder Makropixel eine Mehrzahl von Subpixeln umfassen, die jeweils auf eine gemeinsame Pulsleitung verschaltet werden (logisches ODER).

Weil von statistischen Defekten und Ansprechzeiten der Subpixel auszugehen ist, können einzelne Subpixel abgeschaltet werden, um die Messung nicht zu stören.

Um die zu übertragende Datenmenge zwischen den Sensor-Arrays 3,4 und einer Recheneinheit (z. B. Mikrocontroller 26) zu reduzieren, können die Zählergebnisse mehrere Pixel mit ähnlicher Beleuchtung zu einem "Superpixel" überlagert werden. Außerdem kann die Datenmenge verkleinert werden, indem vor der Übertragung Phase und Energie der Pixel berechnet wird. Das Datenformat umfasst vorzugsweise Real-, Imaginärteil und Energie als Standard-Fließkommazahl, könnte aber auch ein an die zu erwartenden Lichtintensitäten, Amplituden und tolerierbare Phasenfehler angepasstes Festkommaformat sein.

In Fig. 4 sind ein Verfahren 100, eine Vorrichtung 10, ein Speichermedium 15 sowie ein Computerprogramm 20 gemäß Ausführungsbeispielen der Erfindung schematisch dargestellt.

Fig. 4 zeigt insbesondere ein Ausführungsbeispiel für ein Verfahren 100 zum Durchführen einer Laser-Entfernungsmessung mit einem Laser-Entfernungsmessgerät 1 gemäß der Erfindung. In einem ersten Schritt 101 wird ein Aussenden von Licht durch eine Laserdiode 5 des Laser-Entfernungsmessgeräts 1 in Richtung eines Objektes 7 und eines internen Referenzobjektes 8 initiiert. In einem zweiten Schritt 102 werden Sensordaten eines ersten Sensor-Arrays 3 und eines zweiten Sensor-Arrays 4 ausgewertet, um eine Entfernung zwischen dem Laser-Entfernungsmessgerät 1 und dem Objekt 7 zu bestimmen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Integrierter Schaltkreis (2) für ein Laser-Entfernungsmessgerät (1), umfassend:
- Ein erstes Sensor-Array (3), wobei das erste Sensor-Array (3) für eine Erfassung eines von einem Objekt (7) reflektierten Lichts einer Laserdiode (5) des Laser-Entfernungsmessgeräts (1) vorgesehen ist,
- Ein zweites Sensor-Array (4), wobei das zweite Sensor-Array (4) für eine Erfassung des von einem internen Referenzobjekt (8) reflektierten Lichts der Laserdiode (5) vorgesehen ist,
wobei das zweite Sensor-Array (4) eine geringere Größe aufweist als das erste Sensor-Array (3),
- Ein Barriere-Element (6), wobei das Barriere-Element (6) zwischen dem ersten Sensor-Array (3) und dem zweiten Sensor-Array (4) angeordnet ist, um einer Lichtübertragung zwischen dem ersten Sensor-Array (3) und dem zweiten Sensor-Array (4) entgegenzuwirken.

2. Integrierter Schaltkreis (2) nach Anspruch 1,
**dadurch gekennzeichnet,**
**dass** das Barriere-Element (6) ein lichtundurchlässiges Material umfasst, insbesondere Kunststoff oder Metall.

3. Integrierter Schaltkreis (2) nach einem der vorhergehenden Ansprüche, **dadurch gekennzeichnet,**
**dass** der integrierte Schaltkreis (2) ferner eine Glasfläche (9) umfasst, wobei die Glasfläche (9) über dem ersten Sensor-Array (3) und dem zweiten Sensor-Array (4) angeordnet ist, um das erste Sensor-Array (3) und das zweite Sensor-Array (4) mit der Glasfläche (9) abzudecken.

4. Integrierter Schaltkreis (2) nach Anspruch 3,
**dadurch gekennzeichnet,**
**dass** die Glasfläche (9) eine Antireflexbeschichtung aufweist, um eine Lichtausbeute zu erhöhen.

5. Integrierter Schaltkreis (2) nach Anspruch 3 oder 4,
**dadurch gekennzeichnet,**
**dass** die Glasfläche (9) ein Farbfilter aufweist, um ein definiertes Lichtwellenspektrum zu blockieren.

6. Integrierter Schaltkreis (2) nach einem der vorhergehenden Ansprüche, **dadurch gekennzeichnet,**
**dass** einzelne Sensorflächen des ersten Sensor-Arrays (3) und/oder des zweiten Sensor-Arrays (4) eine mehreckige, insbesondere rechteckige oder quadratische, Form aufweisen.

7. Integrierter Schaltkreis (2) nach Anspruch 6,
**dadurch gekennzeichnet,**
**dass** die einzelnen Sensorflächen des ersten Sensor-Arrays (3) und/oder des zweiten Sensor-Arrays (4) teilweise als Makropixel ausgebildet sind, die jeweils eine Mehrzahl von Subpixeln umfassen, wobei die Subpixel auf eine gemeinsame Leitung verschaltet sind.

8. Laser-Entfernungsmessgerät (1) umfassend zumindest einen integrierten Schaltkreis (2) nach einem der vorhergehenden Ansprüche und eine Laserdiode (5).

9. Verfahren (100) zum Durchführen einer Laser-Entfernungsmessung mit einem Laser-Entfernungsmessgerät (1) nach Anspruch 8, umfassend:
- Initiieren (101) eines Aussendens von Licht durch eine Laserdiode (5) des Laser-Entfernungsmessgeräts (1) in Richtung eines Objektes (7) und eines internen Referenzobjektes (8),
- Auswerten (102) von Sensordaten eines ersten Sensor-Arrays (3) und eines zweiten Sensor-Arrays (4), um eine Entfernung zwischen dem Laser-Entfernungsmessgerät (1) und dem Objekt (7) zu bestimmen.

10. Verfahren (100) nach Anspruch 9,
**dadurch gekennzeichnet,**
**dass** im Rahmen des Auswertens (102) der Sensordaten Zählergebnisse mehrerer Pixel des ersten Sensor-Arrays (3) und/oder des zweiten Sensor-Arrays (4) phasenrichtig addiert werden, um eine räumliche Mittelung bereitzustellen.

11. Verfahren (100) nach Anspruch 9 oder 10,
**dadurch gekennzeichnet,**
**dass** das Auswerten (102) der Sensordaten umfasst:
- Berechnen einer Energie und/oder eines Signalvektors auf Basis von Zählergebnissen jedes Pixels.

12. Verfahren (100) nach Anspruch 9 bis 11,
**dadurch gekennzeichnet,**
**dass** das Auswerten (102) der Sensordaten umfasst:
- Auswerten einzelner Makropixel durch einen Mehrphasenzähler, wobei eine Ausleserichtung vorzugsweise senkrecht zu einer Parallaxe liegt.

13. Computerprogramm (20), umfassend Befehle, die bei der Ausführung des Computerprogramms (20) durch wenigstens einen Computer (10) diesen veranlassen, das Verfahren (100) nach einem der Ansprüche 9 bis 12 auszuführen.

14. Vorrichtung (10) zur Datenverarbeitung, die eingerichtet ist, das Verfahren (100) nach einem der Ansprüche 9 bis 12 auszuführen.

15. Computerlesbares Speichermedium (15), umfassend Befehle, die bei der Ausführung durch wenigstens einen Computer (10) diesen veranlassen, die Schritte des Verfahrens (100) nach einem der Ansprüche 9 bis 12 auszuführen.
